# EUROPEAN PATENT APPLICATION

(11) **EP 4 714 789 A1**
(43) Date of publication of application: **25.03.2026**
(21) Application number: 25203720.5
(22) Date of filing: 22.09.2025
(51) Int. Cl.: B62D 7/04, B62D 5/04, B62D 11/00, B66F 9/075, B25J 11/00

(54) **MULTI-AXIS MODULAR COUPLING SYSTEM FOR MOBILE ROBOT**

(30) Priority: 23.09.2024 IN 202411071877
(71) Applicant: Avridh Technologies, Inc., New Haven, Connecticut 06513 (US)
(72) Inventor: Kaimal, Ananthakrishnan Girish, 410206 Navi Mumbai (IN); Agarwal, Rishabh, 342003 Rajasthan (IN)
(74) Representative: Nirwan, Prajwal

(57) **Abstract**

Disclosed is a multi-axis modular coupling system (100) for a mobile robot (102), the multi-axis modular coupling system comprises: a mounting plate (110) employed to attach to different custom modules for enabling movement of different user assets; a first degree of freedom element (202) employed to enable a translational degree of freedom (204) of said system; a second degree of freedom element (206) to enable a first rotational degree of freedom (208) of said system; and a third degree of freedom element (210) to enable a second rotational degree of freedom (212) of said system. When said system is in use, at least one of: the first degree of freedom element, the second degree of freedom element, the third degree of freedom element, operates to accommodate for floor surface irregularities when a given user asset (114) is carried by the mobile robot.

## Description

### TECHNICAL FIELD

The present disclosure relates to multi-axis modular coupling systems for mobile robots.

### BACKGROUND

In modern manufacturing and logistics environments, continuous movement of materials is essential for efficient operations. Factories, warehouses, and distribution centres rely on transfer of pallets, containers, and trolleys to ensure a smooth flow of goods between various stages of production and storage. Autonomous mobile robots (AMRs) have been introduced into these environments to reduce manual effort, improve efficiency, and enhance workplace safety. As these facilities handle a wide variety of user assets (namely, material handling assets), ability to adapt machines to different tasks has become increasingly important.

Traditionally, specialised machines and equipment have been employed for specific user asset types. For example, pallet jacks and forklifts are widely used for lifting and transporting palletised loads, while tugger trains or towing vehicles are deployed to pull multiple trolleys at once. In some cases, material handling robots are equipped with fixed-purpose attachments designed to interface with a particular user asset, such as forks for pallets or clamps for carts.

However, such traditional systems present inherent limitations when faced with diverse and evolving operational needs. Because each type of load-handling equipment is generally designed for a single application, multiple machines are employed to handle different categories of user assets, leading to higher acquisition and maintenance costs. Moreover, fixed attachments often lack flexibility to accommodate variations in load geometry, floor surface irregularities, or asset-specific handling points, resulting in reduced adaptability and operational downtime during changeovers.

Therefore, in light of the foregoing discussion, there exists a need to overcome the aforementioned drawbacks.

### SUMMARY

The aim of the present disclosure is to provide a multi-axis modular coupling system which facilitates in attaching different custom modules with a mobile robot for enabling movement of different user assets, while accommodating for floor surface irregularities, thereby ensuring stable and reliable handling of the different user assets. The aim of the present disclosure is achieved by a multi-axis modular coupling system for a mobile robot, as defined in the appended independent claims to which reference is made to. Advantageous features are set out in the appended dependent claims.

In an aspect, an embodiment of the present disclosure provides a multi-axis modular coupling system for a mobile robot, the mobile robot comprising a structural frame having a first portion and a second portion, the multi-axis modular coupling system being arranged at the second portion of the structural frame, wherein the multi-axis modular coupling system comprises:
a mounting plate employed to attach to different custom modules for enabling movement of different user assets;
a first degree of freedom element employed to enable a translational degree of freedom of the multi-axis modular coupling system along a vertical axis of the multi-axis modular coupling system;
a second degree of freedom element to enable a first rotational degree of freedom of the multi-axis modular coupling system along a longitudinal axis of the multi-axis modular coupling system; and
a third degree of freedom element to enable a second rotational degree of freedom of the multi-axis modular coupling system along a lateral axis of the multi-axis modular coupling system,
wherein when the multi-axis modular coupling system is in use, a given custom module from amongst the different custom modules is attached to the mounting plate, wherein at least one of: the first degree of freedom element, the second degree of freedom element, the third degree of freedom element, operates to accommodate for floor surface irregularities when a given user asset from amongst the different user assets is carried by the mobile robot.

Optionally, the first degree of freedom element is implemented using:
a plurality of guiding rods; and
a plurality of linear carriages slidably engaged with the plurality of guiding rods.

Optionally, the second degree of freedom element is implemented using a ball bearing arrangement.

Optionally, the third degree of freedom element is implemented using a first link and a second link that are mechanically coupled using a pin joint.

Optionally, the given custom module is any one of: a fork module, a clamping module, a trolley-grasping module.

Optionally, the given user asset is any one of: a pallet, a trolley train, a shelf.

Optionally, the given custom module is attached to the mounting plate using any one of: mechanical attachment means, electro-mechanical attachment means, pneumatic attachment means, magnetic attachment means, hydraulic attachment means.

Optionally, the first degree of freedom element comprises at least one damping element configured to isolate a load transfer from the given user asset to a drive system of the mobile robot.

Optionally, a multi-axis modular coupling system further comprising an electrical connector configured to enable electrical interfacing with the given custom module, the electrical connector being adapted to transfer at least one of: a power signal, a control signal, an emergency signal, from the mobile robot to the given custom module.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 illustrates an exemplary scenario where a multi-axis modular coupling system for a mobile robot is in use, in accordance with an embodiment of the present disclosure; and
FIG. 2 illustrates a perspective view of the multi-axis modular coupling system for the mobile robot shown in FIG. 1, in accordance with an embodiment of the present disclosure.

### DETAILED DESCRIPTION

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

The present disclosure provides a multi-axis modular coupling system for a mobile robot. Herein, a single mobile robot is enabled to interface with different custom modules through a mounting plate, for enabling movement of different user assets, while effectively compensating for floor surface irregularities during transportation of the different user assets, thereby ensuring their stable and reliable handling. This compensation is achieved by at least one of: a translational degree of freedom (provided via a first degree of freedom element), a first rotational degree of freedom (provided via a second degree of freedom element), a second rotational degree of freedom (provided via a third degree of freedom element). Thus, the multi-axis modular coupling system is susceptible to be employed for performing diverse tasks, without any need for separate dedicated machines. Further, the multi-axis modular coupling system provides adaptability and robustness, thereby ensuring consistent operation even when load characteristics on a given user asset vary. Since the multi-axis modular coupling system has an ability to adjust through its multiple degrees of freedom (as described hereinabove), it allows the mobile robot to optimally perform in varying environments whilst maintaining stable load engagement while moving on uneven ground surface, thereby aiding the mobile robot to transport the different user assets accurately, without risk of misalignment or detachment. Moreover, distribution of forces across the multiple degrees of freedom prevents concentration of stresses on the structural frame, thereby improving durability of both the mobile robot and the multi-axis modular coupling system. Since the mounting plate provides a standardised interface, the different custom modules can be interchanged (based on a type of a user asset to be transported by the mobile robot) without redesigning the multi-axis modular coupling system or the mobile robot or its part. Beneficially, this increases operational flexibility of the mobile robot. The multi-axis modular coupling system is simple in construction, reliable, and can be implemented with ease.

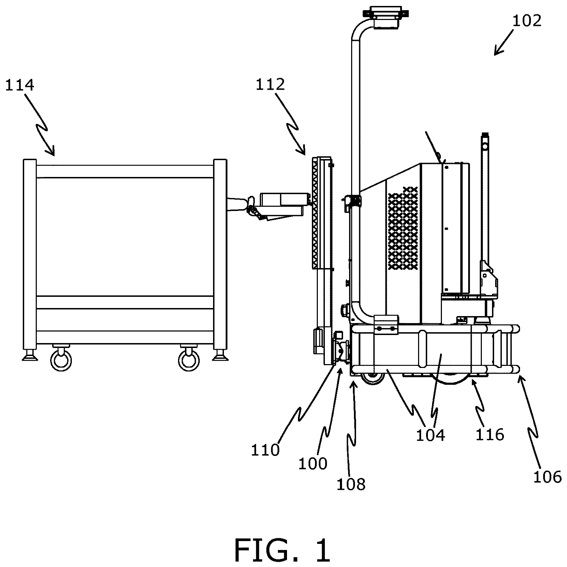

Referring to FIG. 1, illustrated is an exemplary scenario where a multi-axis modular coupling system **100** for a mobile robot **102** is in use, in accordance with an embodiment of the present disclosure. The mobile robot **102** is shown to comprise a structural frame **104** having a first portion **106** and a second portion **108.** The multi-axis modular coupling system **100** is arranged at the second portion **108** of the structural frame **104.** The multi-axis modular coupling system **100** comprises a mounting plate **110** employed to attach a given custom module **112** for enabling movement of a given user asset **114** by the mobile robot **102.** The given custom module **112** is shown to be implemented, for example, a trolley-grasping module. The given user asset **114** is shown to be implemented, for example, as a trolley train.

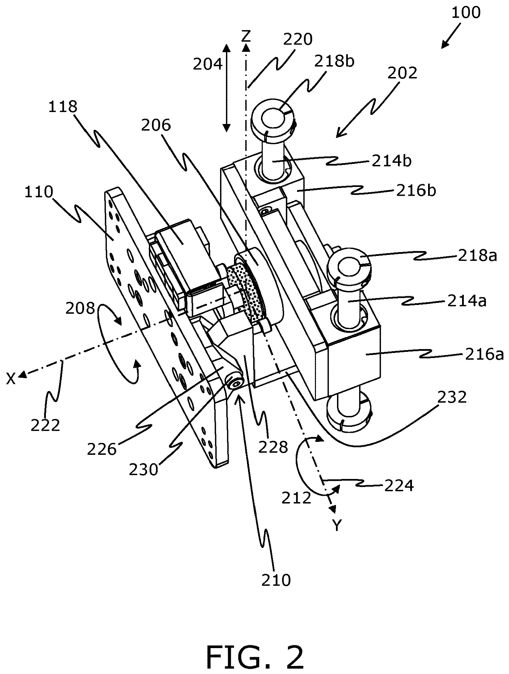

Referring to FIG. 2, illustrated is a perspective view of the multi-axis modular coupling system **100** for the mobile robot **102** shown in FIG. 1, in accordance with an embodiment of the present disclosure. The multi-axis modular coupling system **100** comprises:
the mounting plate **110** employed to attach to different custom modules for enabling movement of different user assets (for example, such as the given user asset **114);**
a first degree of freedom element **202** employed to enable a translational degree of freedom **204** of the multi-axis modular coupling system **100** along a vertical axis **220** (for example, depicted as a Z-axis) of the multi-axis modular coupling system **100;**
a second degree of freedom element **206** to enable a first rotational degree of freedom **208** of the multi-axis modular coupling system **100** along a longitudinal axis **222** (for example, depicted as a X-axis) of the multi-axis modular coupling system **100;** and
a third degree of freedom element **210** to enable a second rotational degree of freedom **212** of the multi-axis modular coupling system **100** along a lateral axis **224** (for example, depicted as a Y-axis) of the multi-axis modular coupling system **100,**
wherein when the multi-axis modular coupling system **100** is in use, the given custom module **112** from amongst the different custom modules is attached to the mounting plate **110,** wherein at least one of: the first degree of freedom element **202,** the second degree of freedom element **206,** the third degree of freedom element **210,** operates to accommodate for floor surface irregularities when the given user asset **114** from amongst the different user assets is carried by the mobile robot **102.**

FIGs. 1 and 2 are merely examples, which should not unduly limit the scope of the claims herein. The person skilled in the art will recognize many variations, alternatives, and modifications of embodiments of the present disclosure.

Throughout the present disclosure, the term *"multi-axis modular coupling system"* refers to a configurable assembly that is arranged on the mobile robot **102** for enabling attachment of the different modules. The multi-axis modular coupling system **100** serves as an intermediary between the mobile robot **102** and the given custom module **112,** thereby allowing the mobile robot **102** to interact with (namely, to transport) the given user asset **114.** For sake of simplicity and convenience, hereinafter, the term *"multi-axis modular coupling system"* is sometimes referred to as *"coupling system".* The term *"multi-axis"* denotes that the coupling system **100** is designed to accommodate for the floor surface irregularities via at least one of the multiple degrees of freedom. The term *"modular"* denotes that the coupling system **100** is structured to allow the different custom modules to be interchangeably connected to the structural frame for enabling movement of the different user assets.

Throughout the present disclosure, the term *"mobile robot"* refers to an autonomous (or may be a semi-autonomous) device that is capable of moving within a real-world environment to perform a given task, unlike a stationary robot that typically operates in a fixed position. The given task could, for example, be a transportation task, a surveillance task, an environment mapping task, and the like. Mobile robots are well-known in the art.

Throughout the present disclosure, the term *"structural frame"* refers to a mechanical structure that is used for forming body of the mobile robot **102,** divided into the first portion **106,** generally employed for drive system and payload support, and the second portion **108,** specifically designated for carrying the coupling system **100.** The structural frame **104** may be understood to be a weight bearing component of the mobile robot **102** which provides a strength and a rigidity to the mobile robot **102** (to withstand various forces or impacts, when the mobile robot **102** is in operation) whilst holding the components of the drive system.

Throughout the present disclosure, the term *"mounting plate"* refers to a planar element forming part of the coupling system **100,** adapted to connect to the given custom module. The mounting plate **110** provides a primary interface through which the given custom module is removably fixed to the mobile robot **102.**

Throughout the present disclosure, the term *"custom module"* refers to an interchangeable accessory unit designed to perform a specific load-handling function. Each custom module (for example, such as the given custom module **112)** is tailored for a particular application for each user asset (for example, such as the given user asset **114).**

Throughout the present disclosure, the term *"user asset"* refers to any object carried, transported, or handled by the mobile robot **102.** The given user asset **114** may vary in size, shape, fragility, and weight, and these parameters influence a choice of driving mode to ensure safe and efficient handling of the given user asset **114.** The different user assets and the different custom modules are designed to be interchangeably secured to the mounting plate **110.**

It will be appreciated that the mounting plate **110** operates as a universal interface between the mobile robot **102** and the given custom module **112.** When the given custom module **112** is to be employed, it is mechanically secured onto the mounting plate **110** in a stable manner, ensuring that forces generated during movement (due to uneven surface) are effectively transferred to the structural frame **104.** By relying on the mounting plate **110,** the different custom modules are swapped without altering the structural frame **104** of the mobile robot **102.** In practice, this means that the mobile robot **102** achieves versatility not by modifying the mounting plate **110,** but by simply interchanging the different custom modules attached to the mounting plate **110.** It will be appreciated that at a given time, one type of custom module is attached to the mounting plate **110** for enabling movement of one type of user asset.

For example, in a facility where the different user assets are present, such as storage units or transport carts, the mobile robot **102** may need to perform multiple tasks during its operation. The mounting plate **110** serves as the universal interface where the given custom module **112** may be attached for moving a transport cart, and later replaced with another custom module suited for a storage unit (namely, another user asset). In this way, the mobile robot **102** is not limited to a single function, but flexibly adapt to various tasks by swapping the different custom modules on the mounting plate **110.**

Throughout the present disclosure, the term *"first degree of freedom element"* refers to a structural element designed to allow a linear movement of the coupling system **100** relative to the structural frame **104** along the Z-axis. The translational degree of freedom **204** along the Z-axis corresponds to an upward displacement or a downward displacement of the coupling system **100** in response to the floor surface irregularities. Throughout the present disclosure, the term *"floor surface irregularity"* refer to a localised variation on a floor surface, for example, such as a bump or a crack, which may cause differences in a contact level between the mobile robot **102** and the given user asset **114.**

In an example, when the mobile robot **102,** in operation, travels on a floor that is uneven or contains small elevation differences such as shallow ridges or surface undulations, the first degree of freedom element **202** may allow the coupling system **100** to "float" vertically within a defined range along the Z-axis. This prevents transmission of abrupt shocks or misalignments to the given user asset **114** that is being carried by the mobile robot **102.** In this way, the first degree of freedom element **202** ensures that despite the floor surface irregularities, the coupling system **100** maintains a stable engagement with the given user asset **114,** and the mobile robot **102** as a whole continues its operation smoothly.

Throughout the present disclosure, the term *"second degree of freedom element"* refers to a component that allows a controlled rotational movement of the coupling system **100** about the X-axis. Unlike the first degree of freedom element **202,** which allows a linear displacement, the second degree of freedom element **206** is specifically arranged to enable an angular movement of the coupling system **100** about the X-axis.

The first rotational degree of freedom **108** allows the coupling system **100** to rotate or pivot within a limited range about the longitudinal axis **222,** to accommodate external conditions such as floor surface irregularities when the given user asset **114** is carried by the mobile robot **102.** The first rotational degree of freedom **208** about the X-axis can be understood to be a tilting movement from side to side, that allows the coupling system **100** to adapt when the ground surface is not levelled. This angular adaptability prevents unnecessary strain on both the mobile robot **102** and the given user asset **114** being transported, while maintaining secure contact throughout its movement.

In an example, an area of a warehouse floor may have worn patches or small depressions due to a long-term use. As the mobile robot **102** travels over such an area, one side of the given user asset **114** may momentarily dip into a depression while the other side remains on level ground. The second degree of freedom element **206** enables the coupling system **100** to rotate slightly about the X-axis, allowing the coupling system **100** to follow an uneven contour in the area of the warehouse floor.

Throughout the present disclosure, the term *"third degree of freedom element"* refers to a component of the coupling system **100** that provides controlled angular flexibility around the Y-axis, distinct from the first degree of freedom element **202** and the second degree of freedom element **206.** The Y-axis refers to an axis that runs across a width of the mobile robot **102,** generally perpendicular to the Z-axis as well as perpendicular to the X-axis of the coupling system **100.** The second rotational degree of freedom **212** about the Y-axis allows the coupling system **100** to tilt concavely upward and downward relative to the structural frame **104** to accommodate for the floor surface irregularities.

It will be appreciated that when the coupling system **100** is in use, the given custom module **112** is secured to the mounting plate **110** for handling the given user asset **114.** During transportation of the given user asset **114,** at least one of: the first degree of freedom element **202,** the second degree of freedom element **206,** the third degree of freedom element **210,** dynamically adjusts (namely, operates) to accommodate for the floor surface irregularities. For example, in a factory corridor with sections of cracked concrete, the mobile robot **102** may encounter a situation where front wheels roll over a raised crack while rear wheels of the given user asset **114** remain momentarily on lower surface. In this case, the third degree of freedom element **210** allows the coupling system **100** to tilt about the Y-axis, enabling the attached given custom module **112** to maintain stable alignment with the given user asset **114** despite sudden unevenness in ground contact. At the same time, when irregularity occurs on a different part of surface, one of other degree of freedom elements may instead act to compensate. This ensures uninterrupted handling of the given user asset **114** across floors with localised imperfections. Moreover, this flexibility ensures that the coupling system **100** to enable a safe and smooth transportation of the given user asset **114** using different degrees of freedom elements alone to perform a terrain-accommodation function, whilst allowing quick and easy attachment and detachment of the different custom modules that handle the different user assets.

With reference to FIG. 2, optionally, the first degree of freedom element **202** is implemented using:
a plurality of guiding rods **214a** and **214b;** and
a plurality of linear carriages **216a** and **216b** slidably engaged with the plurality of guiding rods **214a** and **214b.**

Herein, the term *"guiding rod"* refers to an elongated structural element that provides a fixed linear path along which another component moves, thereby defining a direction of the translational degree of freedom **204** of the coupling system **100** along the Z-axis. The term *"linear carriage"* refers to a sliding component configured to engage with the plurality of guiding rods **214a** and **214b,** typically incorporating low-friction bushings, or roller elements. The plurality of linear carriages **216a** and **216b** allows the translational degree of freedom **204** of the mounting plate **110** relative to the structural frame **104.** In other words, the plurality of guiding rods **214a** and **214b** provide a fixed linear path along which the plurality of linear carriages **216a** and **216b** slide, allowing the first degree of freedom element **202** to move up or down along the Z-axis, in a controlled manner. This ensures that the coupling system **100** adapts to the floor surface irregularities without transmitting abrupt shocks or misalignments to the given user asset **114.**

A technical benefit of implementing the first degree of freedom element **202** using the plurality of guiding rods **214a** and **214b** and the plurality of linear carriages **216a** and **216b** is that it ensures the translational degree of freedom **204** of the coupling system **100** in a precise manner. This ensures that the first degree of freedom element **202** to effectively accommodate for the floor surface irregularities.

With reference to FIG. 2, additionally, optionally, the first degree of freedom element **202** comprises a plurality of vertical constraint components **218a** and **218b** to restrict the translational degree of freedom **204** of the coupling system **100** within a pre-defined threshold range.

With reference to FIG. 2, optionally, the second degree of freedom element **206** is implemented using a ball bearing arrangement. Herein, the term *"ball bearing arrangement"* refers to a mechanical assembly comprises an inner race, an outer race, and rolling elements (for example, such as metallic balls) disposed between the inner race and the outer race. The rolling elements minimise friction while enabling the first rotational degree of freedom **208** of the coupling system **100** along the X-axis of the coupling system **100.** The ball bearing arrangement allows the mounting plate **110** to roll about the X-axis, thereby accommodating tilt.

A technical benefit of implementing the second degree of freedom element **206** using the ball bearing arrangement is that it enables a smooth and reliable first rotational degree of freedom **208** with reduced wear and tear, thereby ensuring long-term durability and stable handling of the different user assets even over irregular floor surfaces. Additionally, the ball bearings arrangement provides a simple, space-efficient way to achieve the first rotational degree of freedom **208,** avoiding bulky suspension systems and thus preserving compact footprint of the mobile robot **102.**

With reference to FIG. 2, optionally, the third degree of freedom element **210** is implemented using a first link **226** and a second link **228** that are mechanically coupled using a pin joint **230.** Herein, the term *"first link"* refers to a rigid elongated member that is attached to a given surface of the mounting plate **110,** serving as one arm of the third degree of freedom element **210.** The term *"second link"* refers to another rigid elongated member that is attached to a surface of an intermediate connecting member **232** of the coupling system **100,** serving as another arm of the third degree of freedom element **210.** The term *"pin joint"* refers to a mechanical connector that pivotally couples the first link **226** and the second link **228,** allowing the second rotational degree of freedom **212** between the first link **226** and the second link **228** about the Y-axis. The pin joint **230** typically comprises a cylindrical pin seated within aligned bore of the first link **226** and the second link **228,** enabling controlled pivoting while restricting the second rotational degree of freedom **212** of the coupling system **100** along the Y-axis.

A technical benefit of implementing the third degree of freedom element **210** using the first link **226** and the second link **228** is that it offers a simple, robust, and low-maintenance way to achieve controlled the second rotational degree of freedom **212** of the coupling system **100** along the Y-axis, thereby improving adaptability of the coupling system **100** to the floor surface irregularities. The first link **226** and the second link **228** with the pin joint **230** arrangement occupies minimal space and adds negligible weight, preserving manoeuvrability and payload efficiency of the mobile robot **102.**

Optionally, the given custom module **112** is any one of: a fork module, a clamping module, a trolley-grasping module. Herein, the term *"fork module"* refers to a type of a custom module comprises a pair of elongated, horizontally extending tines that slide under a load-bearing structure, enabling its lifting and transportation. The term *"clamping module"* refers to a type of a custom module that includes at least one pair of opposing arms having jaws configured to grab or clamp the given user asset **114** for securing the given user asset **114.** The term *"trolley-grasping module"* refers to a type of a custom module having engaging elements (for example, such as hooks, locking arms, couplers, or similar) designed to mechanically interlock with a trolley or a trolley train, thereby enabling the mobile robot **102** to tow or maneuver the given user asset **114.**

A technical benefit of implementing the given custom module **112** as any one of: the fork module, the clamping module, the trolley-grasping module, is that it enables operational versatility, thereby eliminating need for dedicated mobile robot **102** for each task. Additionally, since one mobile robot **102** supports different types of custom modules, this results into reduced capital investment by avoiding purchasing separate mobile robot **102** for handling the different user assets.

Optionally, the given user asset **114** is any one of: a pallet, a trolley train, a shelf. Herein, the term *"pallet"* refers to a flat, generally rectangular platform, designed for supporting goods. The pallet is structured to allow insertion of forks or lifting tines beneath it, making it standard load carriers in warehouses and factories. The term *"trolley train"* refers to a connected sequence of wheeled carts or a connected sequence of trolleys that is attached to the coupling system **100** for collective movement with the mobile robot **102.** The term *"shelf"* refers to the user asset **114** of a storage-type that is configured to carry multiple items, which may be transported as a unit by the mobile robot **102** when engaged through the custom module **112.**

A technical benefit of implementing the given user asset **114** as any one of: the pallet, the trolley train, the shelf, is that it enables the same mobile robot **102** to handle the different user assets. This improves versatility while reducing operational complexity in material handling environments. For example, by accommodating both the pallet and the trolley train, the mobile robot **102** significantly streamlines operations of warehouse and factory floor.

Optionally, the given custom module **112** is attached to the mounting plate **110** using any one of: mechanical attachment means, electro-mechanical attachment means, pneumatic attachment means, magnetic attachment means, hydraulic attachment means. In this regard, the mechanical attachment means are physical fastening elements (for example, such as bolts, screws, clamps, latches, or similar) that create a rigid mechanical connection between the given custom module **112** and the mounting plate **110.** The electro-mechanical attachment means are hybrid fastening elements that use electrically driven actuators (for example, such as solenoids, motorized clamps, powered latches, or similar) to automatically engage or disengage the given custom module **112** and the mounting plate **110.** The pneumatic attachment means are those fastening elements that rely on compressed air actuators (for example, such as pneumatic clamps or suction-based grips) to attach the given custom module **112** with the mounting plate **110.** The magnetic attachment means utilised permanent magnets or electromagnets to hold the given custom module **112** to the mounting plate **110.** The hydraulic attachment means are those attachment elements that uses fluid-actuated pistons or fluid-actuated clamps to press and lock the given custom module **112** with the mounting plate **110.** A technical benefit of using any one of the aforesaid attachment means is that it ensures reliable securing of the given custom module **112** with the mounting plate **110** for different operational needs.

With reference to FIG. 2, optionally, the first degree of freedom element **202** comprises at least one damping element (not shown) configured to isolate a load transfer from the given user asset **114** to a drive system **116** of the mobile robot **102.** Herein, the term *"damping element"* refers to a component integrated into the first degree of freedom element **202,** and configured to absorb and dissipate energy associated with shocks, vibrations, or sudden load changes, during a movement of the mobile robot **102.** Examples of the damping element include, but are not limited to, a spring-damper unit, an elastomer bushing, a hydraulic damper, and a viscoelastic material. The term *"drive system"* refers to a combination of components being capable of providing a power to the mobile robot **102** and controlling a movement of the mobile robot **102** in a real-world environment, thereby enabling the mobile robot **102** to navigate and perform the given task autonomously (or may be semi-autonomously).

A technical benefit of utilising the damping element to isolate the load transfer is that it prevents abrupt force transmission from the given user asset **114** to the drive system **116,** thereby protecting sensitive drive system's components for example, such as gearboxes, motors, and wheels, of the mobile robot **102.** Further, absorption of shocks enhances operational stability, reducing risk of trolley shift, spillage, or mechanical damage to the given custom module **112.** By isolating the load transfer from the given user asset **114** to the drive system **116,** wear on bearings, joints, and structural members is significantly reduced, leading to longer service intervals and lower maintenance costs of the mobile robot **102** and the coupling system **100.**

With reference to FIG. 2, optionally, the multi-axis modular coupling system **100** further comprises an electrical connector **118** configured to enable electrical interfacing with the given custom module **112,** the electrical connector **118** being adapted to transfer at least one of: a power signal, a control signal, an emergency signal, from the mobile robot **102** to the given custom module **112.** Herein, the term *"electrical connector"* refers to a establish an electrical connection between the mobile robot **102** and the given custom module **112** attached to the mounting plate **110.** The electrical connector **118** enables a transfer of at least one of: the power signal to operate actuators within the given custom module **112,** the control signal to synchronise its functions with navigation of the mobile robot **102,** the emergency signal to ensure safe operation of the mobile robot. This allows seamless integration of the given custom module **112** which is electrically active without requiring manual wiring each time the given custom module **112** is changed.

A technical benefit of utilising the electrical connector **118** is that it ensures that the given custom module **112** interfaces directly with the drive system **116** of the mobile robot **102,** enabling intelligent operation without additional cabling. Inclusion of the emergency signal allows immediate shutdown of the given custom module **112** in case of hazards, thereby preventing accidents or damage to both the mobile robot **102** and the given user asset **114.** Standardization of the electrical connector **118** allows integration of a future custom module with advanced sensors, communication systems, or automation features, ensuring long-term scalability of the coupling system **100.**

## Claims

1. A multi-axis modular coupling system (100) for a mobile robot (102), the mobile robot comprising a structural frame (104) having a first portion (106) and a second portion (108), the multi-axis modular coupling system being arranged at the second portion of the structural frame, wherein the multi-axis modular coupling system comprises:
a mounting plate (110) employed to attach to different custom modules for enabling movement of different user assets;
a first degree of freedom element (202) employed to enable a translational degree of freedom (204) of the multi-axis modular coupling system along a vertical axis (220) of the multi-axis modular coupling system;
a second degree of freedom element (206) to enable a first rotational degree of freedom (208) of the multi-axis modular coupling system along a longitudinal axis (222) of the multi-axis modular coupling system; and
a third degree of freedom element (210) to enable a second rotational degree of freedom (212) of the multi-axis modular coupling system along a lateral axis (224) of the multi-axis modular coupling system,
wherein when the multi-axis modular coupling system is in use, a given custom module (112) from amongst the different custom modules is attached to the mounting plate, wherein at least one of: the first degree of freedom element, the second degree of freedom element, the third degree of freedom element, operates to accommodate for floor surface irregularities when a given user asset (114) from amongst the different user assets is carried by the mobile robot.

2. A multi-axis modular coupling system (100) of claim 1, wherein the first degree of freedom element (202) is implemented using:
a plurality of guiding rods (214a, 214b); and
a plurality of linear carriages (216a, 216b) slidably engaged with the plurality of guiding rods.

3. A multi-axis modular coupling system (100) of any of the preceding claims, wherein the second degree of freedom element (206) is implemented using a ball bearing arrangement.

4. A multi-axis modular coupling system (100) of any of the preceding claims, wherein the third degree of freedom element (210) is implemented using a first link (226) and a second link (228) that are mechanically coupled using a pin joint (230).

5. A multi-axis modular coupling system (100) of any of the preceding claims, wherein the given custom module (112) is any one of: a fork module, a clamping module, a trolley-grasping module.

6. A multi-axis modular coupling system (100) of any of the preceding claims, wherein the given user asset (114) is any one of: a pallet, a trolley train, a shelf.

7. A multi-axis modular coupling system (100) of any of the preceding claims, wherein the given custom module (112) is attached to the mounting plate (110) using any one of: mechanical attachment means, electro-mechanical attachment means, pneumatic attachment means, magnetic attachment means, hydraulic attachment means.

8. A multi-axis modular coupling system (100) of any of the preceding claims, wherein the first degree of freedom element (202) comprises at least one damping element configured to isolate a load transfer from the given user asset (114) to a drive system (116) of the mobile robot (102).

9. A multi-axis modular coupling system (100) of any of the preceding claims, further comprising an electrical connector (118) configured to enable electrical interfacing with the given custom module (112), the electrical connector being adapted to transfer at least one of: a power signal, a control signal, an emergency signal, from the mobile robot (102) to the given custom module (112).
